# FASCICULE DE BREVET EUROPEEN

(11) **EP 1 367 850 B1**
(45) Date de publication et mention de la délivrance du brevet: **23.01.2013**
(21) Numéro de dépôt: 03291182.8
(22) Date de dépôt: 20.05.2003
(51) Int. Cl.: H04W 48/02

(54) **Procédé de restriction de l'usage d'un terminal radio et dispositif de restriction associé**
Verfahren zur Begrenzung auf Benutzung eines Funkendgerätes und zugehörige Begrenzungsvorrichtung
Method for restricting the use of a radio terminal and associated restriction device

(30) Priorité: 30.05.2002 FR 0206645
(43) Date de publication de la demande: 03.12.2003
(73) Titulaire: Alcatel Lucent, 75007 Paris (FR)
(72) Inventeur: Lucidarme, Thierry, 78180 Montigny-Le-Bretonneux (FR); Lescuyer, Pierre, 78180 Montigny-Le-Bretonneux (FR)
(74) Mandataire: Sciaux, Edmond

(56) Documents cités:
- GB-A- 2 360 863
- US-A1- 2001 006 886

## Description

La présente invention concerne les radiocommunications avec les mobiles, et plus particulièrement les méthodes de brouillage des communications avec les mobiles.

Des systèmes de brouillage destinés à l'industrie civile ont été développés afin d'empêcher la réception et l'émission de communications avec des mobiles sur une zone géographique déterminée. De tels systèmes peuvent par exemple être utilisés dans des lieux où la sonnerie d'appel d'un terminal mobile et la conversation qui s'ensuit peuvent gêner d'autres personnes, comme par exemple des salles de spectacle, des édifices religieux, ou des salles de lecture. Il peut aussi être souhaitable d'empêcher tout appel à partir d'un terminal mobile dans une zone géographique déterminée, comme par exemple l'enceinte d'un établissement pénitencier, d'une salle d'examen, etc.

Certains systèmes de brouillage empêchent toute communication entre un mobile et sa station de base. Ils peuvent opérer par émission d'un signal ayant la fréquence porteuse du signal à brouiller (en anglais « Continuous Wave jammers »), ou par brouillage de certaines informations diffusées sur un signal de balise de la station de base. Par exemple, dans le système GSM (« Global System for Mobile communications ») qui utilise une technique d'accès multiple à répartition dans le temps (TDMA, « Time-Division Multiple Access »), le brouillage de certaines tranches temporelles (« time slots ») durant lesquelles le réseau transmet aux mobiles des informations de contrôle peut empêcher toute communication avec les mobiles situés dans la zone de couverture d'un dispositif de brouillage.

D'autres méthodes de brouillage, comme décrit dans les documents GB 2 353 921, WO 99/55102 ou US 6,687,506, viennent substituer à l'échange de messages de signalisation d'établissement d'appel avec la station de base avec laquelle le mobile communiquerait lors de l'établissement normal d'une communication une signalisation de refus d'établissement d'appel. Ce fonctionnement impose au dispositif de brouillage de détecter et de servir toute requête d'accès aléatoire provenant d'un mobile avant la station de base à laquelle la requête est effectivement destinée. Un tel niveau de réactivité vis-à-vis du réseau que l'on cherche à brouiller peut être difficile à atteindre dans des situations où les requêtes d'accès aléatoires des mobiles sont reçues aussi bien, voire mieux, par la station de base que par le système de brouillage. Cela nuit à la fiabilité de ces systèmes, qui sont de plus complexes puisqu'il doivent venir se substituer au réseau dans ses échanges avec un terminal.

La présente invention a pour but de pallier les limitations exposées ci-dessus des méthodes connues de brouillage.

La présente invention propose ainsi un procédé pour restreindre l'usage d'un terminal radio apte à communiquer avec un réseau de radiocommunication, le réseau étant agencé pour transmettre un signal d'acquittement en réponse à une requête d'accès au réseau reçue du terminal (4), le procédé comprenant les étapes suivantes :
- intercepter une requête d'accès au réseau émise par le terminal ;
- évaluer, à partir de paramètres relatifs à la requête d'accès interceptée, un critère de restriction sélective ;
- lorsque le critère de restriction sélective est rempli, émettre un signal radio de perturbation du signal d'acquittement produisant une interférence avec le signal d'acquittement, et on estime un instant de début de réception du signal d'acquittement par le terminal et un instant de fin de réception dudit signal d'acquittement par le terminal, et l'émission du signal radio de brouillage anticipe l'instant estimé de début de réception du signal d'acquittement par le terminal, et se prolonge au-delà de l'instant estimé de fin de réception dudit signal d'acquittement par le terminal.

Avantageusement, l'évaluation du critère de restriction sélective comporte la détermination d'un type de communication dont l'établissement est requis par le terminal à partir des paramètres relatifs à la requête d'accès interceptée. Ce type peut par exemple correspondre à des appels d'urgence, de sorte que le critère de restriction sélective peut être défini de manière à éviter la restriction des appels d'urgence.

Dans un mode de réalisation préféré de l'invention, les paramètres relatifs à la requête d'accès comprennent des paramètres relatifs à des ressources utilisées pour requérir l'accès.

Un autre aspect de l'invention se rapporte à un dispositif de restriction de l'usage d'un terminal radio apte à communiquer avec un réseau de radiocommunication, le réseau étant agencé pour transmettre un signal d'acquittement en réponse à une requête d'accès au réseau reçue du terminal, le dispositif comprenant des moyens pour intercepter une requête d'accès au réseau émise par le terminal, des moyens pour évaluer un critère de restriction sélective, à partir de paramètres relatifs à la requête d'accès interceptée, et des moyens pour émettre, lorsque le critère de restriction sélective est rempli, un signal radio de perturbation du signal d'acquittement, produisant une interférence avec ledit signal d'acquittement, des moyens pour estimer un instant de début de réception du signal d'acquittement par le terminal et un instant de fin de réception dudit signal d'acquittement par le terminal, et pour émettre le signal radio de brouillage de façon anticipée par rapport à l'instant estimé de début de réception du signal d'acquittement par le terminal, et le prolonger au-delà de l'instant estimé de fin de réception dudit signal d'acquittement par le terminal.

Avantageusement, les moyens pour évaluer un critère de restriction sélective comprennent des moyens pour déterminer un type de communication dont l'établissement est requis par le terminal à partir des paramètres relatifs à la requête d'accès interceptée.

Dans un mode de réalisation préféré de l'invention, les paramètres relatifs à la requête d'accès comprennent des paramètres relatifs à des ressources utilisées pour requérir l'accès.

Le dispositif selon l'invention peut en outre comprendre des moyens pour recevoir des informations relatives à une procédure d'accès au réseau diffusées par le réseau, coopérant avec lesdits moyens d'interception et d'évaluation.

D'autres particularités et avantages de la présente invention apparaîtront dans la description ci-après d'un exemple de mise en oeuvre non limitatif du procédé selon l'invention, en référence aux dessins annexés, dans lesquels :
- la figure 1 représente deux terminaux mobiles reliés à une station de base d'un système de radiocommunication dont l'un est placé sous la couverture d'un dispositif de restriction selon l'invention ;
- la figure 2 est un schéma illustrant la structure de trame employée pour les canaux physiques RACH, AICH et P-CPICH dans le système UMTS en mode FDD ;
- la figure 3 est un schéma illustrant la définition de trois classes ASC sur l'espace des ressources d'accès aléatoire dans le système UMTS en mode FDD;
- la figure 4 est un schéma synoptique d'un dispositif de restriction selon l'invention.

Dans la présente description, l'invention sera décrite plus particulièrement dans son application, non limitative, aux réseaux de radiocommunication de troisième génération de type UMTS (« Universal Mobile Télécommunication System ») en mode FDD (« Frequency Division Duplex »).

L'UMTS est un système de radiocommunication dont le réseau d'accès, appelé UTRAN (« UMTS Terrestrial Radio Access Network »), utilise un accès multiple à répartition par codes (CDMA, « Code-Division Multiple Access »), c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Le réseau d'accès UTRAN comporte des contrôleurs de réseau radio 5 appelés RNC (« Radio Network Controller ») qui, par l'intermédiaire d'une interface *lub,* pilotent des noeuds de réseau 1 appelés « node B ». Chaque node B comporte une ou plusieurs stations de base desservant chacune une ou plusieurs cellules. Ces stations de base communiquent par radio avec des terminaux mobiles 2, 3 appelés UE (« User Equipment ») par l'intermédiaire d'une interface *Uu* (voir spécification technique 3G TS 25.401, version 3.3.0, publiée par l'organisation 3GPP). L'UTRAN est relié à un coeur de réseau 6 (CN, "Core Network"), au moyen d'une interface dite *lu*.

Chaque UE 2, 3 peut être dans plusieurs états de liaison avec l'UTRAN, gérés par un protocole de gestion des ressources radio (RRC, « Radio Resource Control ») mis en oeuvre au niveau du RNC et au niveau de l'UE (voir spécification technique 3G TS 25.331, version 3.3.0, publiée en juin 2000 par le 3GPP, section 9).

A l'inverse de l'UE 3, l'UE 2 est situé dans la zone de couverture du dispositif de restriction 4, représentée schématiquement en pointillés. Le dispositif de restriction 4 est alors capable d'intercepter des échanges de messages entre l'UE 2 et le node-B 1, et d'émettre des signaux radio qui seront captés par l'UE 2.

Les codes d'étalement distinguent différents canaux physiques PhCH (« Physical CHannel ») qui sont superposés sur la même ressource de transmission constituée par une fréquence porteuse. Les propriétés d'auto- et d'inter-corrélation des codes d'étalement permettent au récepteur de séparer les PhCH et d'extraire les symboles qui lui sont destinés. Pour l'UMTS en mode FDD sur la liaison descendante, un code de « scrambling » est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de « scrambling » de la station de base. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques, comprenant des canaux communs et des canaux dédiés, obéissent à une structure de trame dans laquelle des trames de 10 ms se succèdent sur la fréquence porteuse utilisée par la station de base. Chaque trame est subdivisée en 15 tranches temporelles (« timeslots ») de 666 µs.

Pour initialiser une communication, ou plus généralement pour transmettre des informations à l'UTRAN en mode veille, l'UE émet à destination de la station de base sélectionnée un signal de requête d'accès aléatoire sur un canal commun appelé PRACH (« Physical Random Access Channel »).

Cette procédure d'accès aléatoire est exécutée par la couche physique (voir spécifications techniques 3G TS 25.211 et TS 25.214, version 3.9.0, section 6), sous le contrôle de la couche de contrôle d'accès au médium (MAC, voir spécification technique 3G TS 25.321, version 3.9.0, publiée en septembre 2001 par le 3GPP, section 11.2) et de la couche RRC.

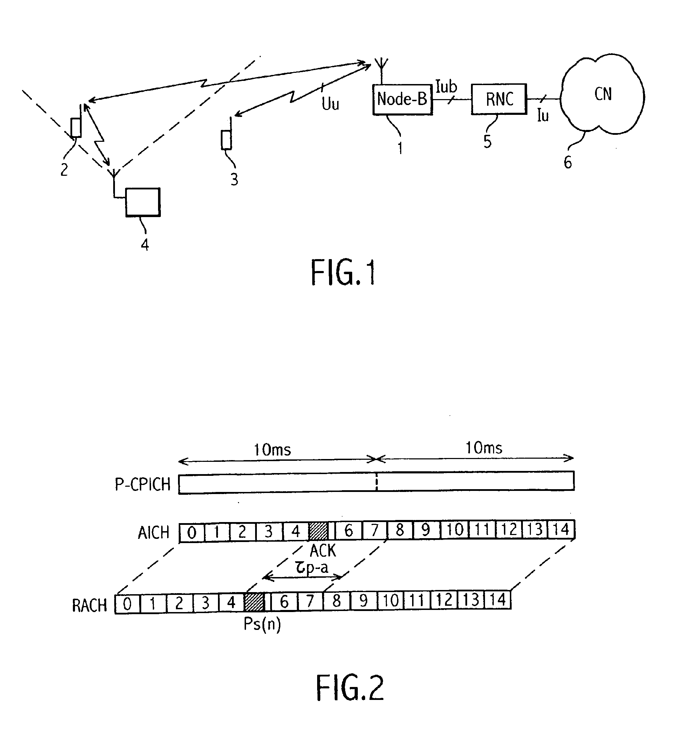

La structure du canal PRACH est illustrée sur la figure 2. Un mobile effectue un accès aléatoire sur le réseau d'accès UMTS FDD par une transmission sur une tranche temporelle déterminée appelée tranche d'accès (« access slot»). Quinze tranches d'accès, espacées de 5120 chips, sont disponibles sur deux trames de 10ms et constituent un motif répété toutes les 20 ms.

On distingue douze sous-canaux RACH, un sous-canal RACH correspondant à un sous-ensemble de l'ensemble des 15 tranches d'accès sur deux trames. Le sous-canal RACH n°i (i = 0, ..., 11) est constitué de la tranche d'accès montant d'indice i anticipant de τₚ₋ₐ chips la tranche d'accès descendant d'indice i prévue pour la réponse du réseau d'accès, et des tranches d'accès d'indice i + 12×k (k entier), calculé modulo 15 (voir spécification technique 3G TS 25.214, version 3.9.0, publiée en décembre 2001 par le 3GPP, section 6.1).

Une transmission d'accès aléatoire est constituée d'un ou d'une pluralité de préambules de longueur 4096 chips, et d'un message de longueur 10ms ou 20ms. Chaque préambule a une longueur de 4096 chips, et est constitué de 256 répétitions d'un code appelé signature et noté Pₛ(n), 0 ≤ n ≤ 15, parmi 16 disponibles pour effectuer une requête d'accès aléatoire. Les signatures de préambule RACH Pₛ(n) sont des codes de Hadamard de longueur 16 chips, qui sont listés au paragraphe 4.3.3 de la spécification 3GPP TS 25.213, version 3.7.0, publiée en décembre 2001.

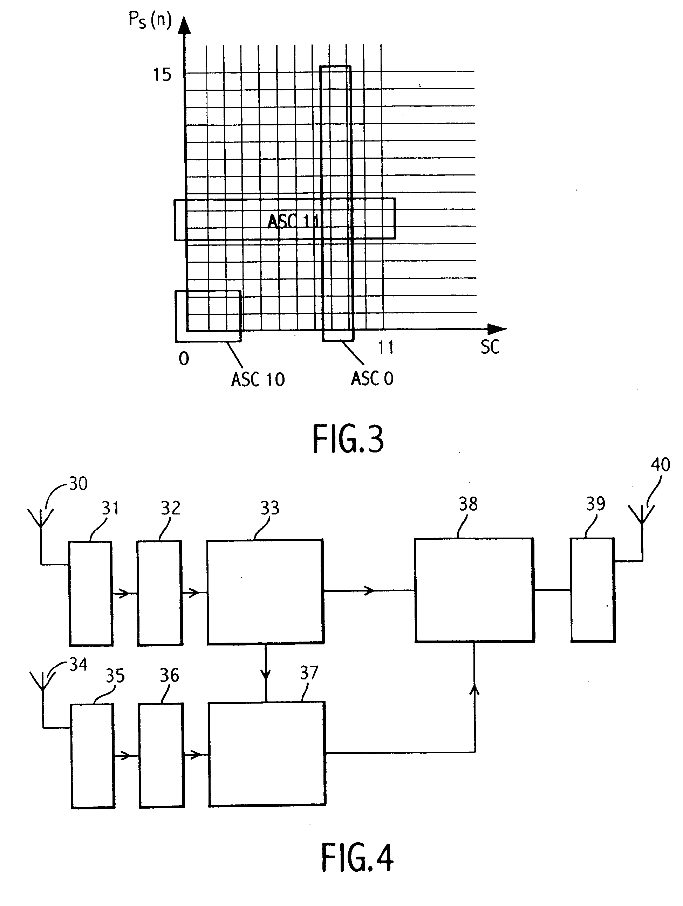

Chaque accès aléatoire doit être effectué sur un sous-canal RACH (parmi douze sous-canaux possibles), en utilisant une signature déterminée (parmi 16 codes possibles). Ces ressources d'accès aléatoire sont utilisées indépendamment l'une de l'autre, et peuvent donc être représentées par un espace bidimensionnel tel que présenté à la figure 3. Ce schéma illustre l'ensemble des couples (sc(i) ; Pₛ(n)), avec 0 ≤ i ≤ 11 et 0 ≤ n ≤ 15, où i désigne un numéro de sous-canal RACH, et n un indice de signature de préambule.

Des classes d'accès au service (« Access Service Class ») définissent une partition de ces ressources d'accès aléatoire. On distingue K classes ASC(k), avec O ≤ k ≤ K-1, chacune correspondant à un ou plusieurs sous-ensembles l(k) de couples {(SC(i) ; Pₛ(n)) / i_{min, l(k)} ≤ i ≤ i_{max,l(k)} et n_{min,l(k)} ≤ n ≤ n_{max,l(k)}}. Un même couple (sc(i) ; Pₛ(n)) peut correspondre à plusieurs classes ASC, de sorte que la partition des ressources définie par les classes ASC peut être recouvrante. Dans un tel cas, on suppose cependant qu'il existe au moins un sous-ensemble θ de couples {(sc(i) ; Pₛ(n)) / i_{min,θ} ≤ i ≤i_{max,θ} et n_{min,θ} ≤ n ≤ n_{max,θ}} (qui peut éventuellement être réduit à un seul couple) auquel il ne correspond qu'une unique classe ASC, notée ASC(θ).

La figure 3 donne quelques exemples de correspondance entre l'ensemble des ressources d'accès aléatoire {(sc(i) ; Pₛ(n)) / 0 ≤ i ≤ 11 et 0 ≤ n ≤ 15} et les classes ASC. Une première classe ASC, numérotée ASC(0), correspond au sous-ensemble de ressources {(sc(i) ; Pₛ(n)) / 8 ≤ i ≤ 9 et 0 ≤ n ≤ 15}. La classe ASC(11) correspond au sous-ensemble {(sc(i) ; Pₛ(n)) / 0 ≤ i ≤ 11 et 6 ≤ n ≤ 7}. Le sous-ensemble {(sc(i) ; Pₛ(n)) / 8 ≤ i ≤ 9 et 6 ≤ n ≤ 7} est alors commun aux deux classes ASC(0) et ASC(11). La classe ASC(θ) peut par exemple correspondre au sous-ensemble {(sc(i) ; Pₛ(n)) / 0 ≤ i ≤ 2 et 0 ≤ n ≤ 2} comme indiqué sur la figure 3.

Toute procédure d'accès aléatoire sur la couche physique est initiée sur requête de la couche MAC. Elle ne peut être effectuée que si la couche physique a reçu de la couche RRM un ensemble de signatures disponibles ainsi que les sous-canaux RACH disponibles pour chaque classe ASC.

Le système UMTS comporte des classes d'accès qui permettent de distinguer différents types d'appels. Ces classes d'accès sont décrites en détail dans la spécification 3GPP TS 22.011, version V3.7.0 au paragraphe 4 (p. 11 et 12). Seize classes d'accès, numérotées de 0 à 15, sont définies dans le standard UMTS.

Les classes d'accès standard, numérotées de 0 à 9, correspondent aux appels standard et sont allouées à tous les abonnés de manière à obtenir une distribution aléatoire uniforme. Chaque abonné se voit ainsi attribuer une classe d'accès standard, qui est consignée dans son module d'identification d'abonné, dit module SIM/USIM ("Universal Subscriber Identity Module"), qui peut éventuellement être une carte que l'on insère dans le terminal.

Outre cette classe d'accès standard, certains abonnés disposent d'une ou de plusieurs classes d'accès parmi les 5 classes d'accès numérotées de 11 à 15. La classe d'accès numéro 10 est réservée aux appels d'urgence.

Il existe d'autre part une correspondance, propre à chaque cellule, entre les classes ASC et les classes d'accès (voir la spécification 3GPP TS 22.331, version V3.9.0 au paragraphe 8.5.13). Dans le système UMTS, une seule classe ASC peut être mise en correspondance avec les classes d'accès standard, tandis que les autres classes d'accès peuvent être mise individuellement en correspondance avec une classe ASC.

Pour les besoins de l'invention, on supposera dans la suite que la classe ASC(θ) est uniquement mise en correspondance avec une classe d'accès donnée, qui peut par exemple être la classe d'accès 10, réservée aux appels d'urgence.

Lorsque l'UE est sous tension et dans une cellule sélectionnée sans avoir de communication en cours avec l'UTRAN, il est dans un état de veille (« idle »). Les processus de sélection initiale et de resélection de cellule sont décrits dans la spécification technique 3G TS 25.304, version 3.6.0 publiée en mars 2001 par le 3GPP, section 5.2. Dans cet état de veille, après avoir sélectionné une cellule, l'UE reçoit des informations système émises sur un canal de diffusion (BCH) par la station de base de la cellule sélectionnée (voir spécification technique 3G TS 25.331, version 3.9.0 publiée en décembre 2001 par le 3GPP, section 8.1.1).

Ces informations système incluent entre autres des informations de contrôle de l'accès montant, ainsi que des informations relatives à la procédure d'accès aléatoire sur la couche physique.

L'information de contrôle de l'accès montant comprend les classes d'accès pour lesquelles l'accès aléatoire est autorisé. Les informations relatives à la procédure d'accès aléatoire sur la couche physique identifient les tranches d'accès et les signatures qu'il est permis d'utiliser.

Ces informations système incluent en outre la correspondance entre classes d'accès et classes ASC pour la cellule.

La procédure d'accès aléatoire sur la couche physique prévoit l'envoi par l'UTRAN d'un indicateur d'acquittement (« Al - Acquisition Indicator ») sur le canal physique commun descendant AICH (« Acquisition Indicator Channel ») de la signature de préambule RACH. Cet acquittement présente une structure similaire à celle du préambule RACH, en ce qu'il utilise un facteur d'étalement égal à 256 et une signature de séquence 16 chips. L'acquittement de l'accès aléatoire peut être positif ou négatif. Dans l'exemple de réalisation de l'invention, un acquittement sur le canal AICH utilisant une signature identique à la signature de préambule RACH est positif, tandis qu'un acquittement utilisant une signature inversée par rapport à la signature de préambule RACH est négatif.

Le canal AICH est, de même que les sous-canaux RACH, structuré selon un motif composé de 15 tranches temporelles d'accès successives, répété toutes les 20 ms (figure 2). Il est synchronisé sur un canal pilote primaire appelé P-CPICH (« Primary Common Pilot Channel ») sur lequel chaque station de base du node-B 1 émet un signal de balise (voir spécification technique 3G TS 25.211 publiée par le 3GPP, version 3.9.0, section 7). Le canal P-CPICH sert de référence en phase à d'autres canaux physiques, dont le canal AICH. Il est distingué par un code de « channelisation » unique normalisé (voir spécification technique 3G TS 25.213 publiée par le 3GPP, version 3.9.0, section 5.2).

La transmission descendante de l'acquittement ne peut être initiée qu'au début de la tranche d'accès AICH décalée de τₚ₋ₐ chips (τₚ₋ₐ étant un nombre déterminé en fonction de la longueur du message qui suit le préambule) par rapport au début de la tranche d'accès utilisée pour la transmission montante du préambule de l'accès aléatoire.

La figure 4 illustre schématiquement un dispositif de restriction selon l'invention.

Le dispositif de restriction est doté de moyens de réception 30, 31, 32 des informations diffusées par le réseau d'accès vers les UE, et de moyens de réception 34, 35, 36 des requêtes d'accès aléatoires émises par les UEs à destination du réseau d'accès.

Ces moyens 30, 31, 32 et 34, 35, 36 comportent un étage radio 31, 35 qui reçoit le signal radio capté par l'antenne 30, 34 et le transpose à plus basse fréquence. Le signal est ensuite transmis à un module récepteur 32, 36 pour être traité (filtrage de remise en forme et conversion analogique-numérique) d'une manière connue en soi.

Le module 33 traite les informations système décodées pour chaque canal de diffusion détecté par le module récepteur 32 à partir du signal radio capté par l'antenne 30 et traité par l'étage radio 31. Cela permet l'acquisition des paramètres suivants des canaux communs PRACH (voir spécification technique 3G TS 25.331 publiée par le 3GPP, version 3.9.0, sections 10.3.6.55 et 10.3.6.52):
- les tranches d'accès (« access slot ») autorisées pour l'émission d'un préambule d'accès aléatoire ;
- les signatures de préambule autorisées pour l'émission d'un préambule d'accès aléatoire ;
- le code d'entrelacement du préambule d'accès aléatoire ;
- les valeurs de facteur d'étalement autorisées.

La définition des classes ASC est aussi diffusée par le réseau d'accès (voir spécification technique 3G TS 25.331 publiée par le 3GPP, version 3.9.0, sections 10.3.6.55 et 10.3.6.53), de même que les paramètres d'asservissement temporel des canaux PRACH et AICH (voir spécification technique 3G TS 25.331 publiée par le 3GPP, version 3.9.0, sections 10.3.6.55 et 10.3.6. 2).

Le canal de diffusion C-PICH fournit comme on l'a vu une référence de phase pour le canal AICH, ainsi que pour les sous-canaux RACH lorsque les paramètres d'asservissement temporel des canaux PRACH et AICH ont été acquis.

Le dispositif de restriction est donc capable, à partir des informations diffusées par le réseau d'accès, de détecter puis décoder les informations transmises sur un préambule RACH d'un UE qui effectue un accès aléatoire dans sa zone de couverture.

La prise en compte des informations systèmes diffusées par le réseau lui permet aussi, de même qu'un UE, de déterminer et de mémoriser la correspondance entre classes d'accès et classes ASC propre à chaque cellule du réseau d'accès (voir spécification technique 3G TS 25.331 publiée par le 3GPP, version 3.9.0, sections 10.3.6.55 et 10.3.6.1). Ces traitements sont effectués au sein du module 33.

Les correspondances entre, d'une part l'ensemble des ressources d'accès aléatoire et les classes ASC, et d'autre part les classes ASC et les classes d'accès, sont aussi mémorisées par le module 33, par exemple dans des « look-up » tables, qui sont mises à jour sur la base des modifications des informations diffusées par le réseau.

Lorsqu'un UE initie un accès aléatoire, il sélectionne une classe ASC en fonction de la classe d'accès autorisée qu'il utilise pour l'appel. Lors d'un appel standard, la classe ASC ainsi sélectionnée sera celle qui correspond aux classes d'accès standard (classes d'accès de 0 à 9).

A la classe ASC(k) ainsi sélectionnée correspondra comme indiqué précédemment un ou plusieurs sous-ensemble autorisé l(k) de couples {( sc(i) ; Ps(n)) /i_{min, I(k)} ≤ i ≤ i_{max,I(k)} et n_{min,I(k)} ≤ n ≤ n_{max,I(k)}} de l'ensemble des ressources RACH.

Le module 37 traite les informations d'utilisation de ressource décodées pour chaque canal physique d'accès aléatoire détecté par le module récepteur 36 dans le sens montant (de l'UE vers le réseau d'accès) à partir du signal radio capté par l'antenne 34 et traité par l'étage radio 35.

L'interception par le dispositif de brouillage des requêtes d'accès aléatoires provenant des UE sous sa zone de couverture est ainsi effectuée sur la base des informations de structure des canaux physiques PRACH qui sont décodées par le module 33, pour être ensuite transmises au module 37.

Le dispositif selon l'invention effectue une restriction sélective, et la décision de perturber ou non un appel est prise sur la base de paramètres relatifs à la requête d'accès interceptée. Dans une réalisation préférée de l'invention, la décision de perturber est fonction du type d'appel, caractéristique qui est distinguée dans le système UMTS par le biais de la notion de classe d'accès. Le module 37 comprend une table de configuration, dans lequel sont répertoriées les classe d'accès ainsi qu'un indicateur afin de préciser si l'appel initialisé par une requête d'accès aléatoire émise en utilisant une classe d'accès donnée doit ou non être perturbé. Du fait des correspondances établies entre d'une part les ressources d'accès aléatoire et les classes ASC, et d'autre part les classes ASC et les classes d'accès, et sous réserve que certaines au moins des correspondances entre les éléments soient biunivoques, la classe d'accès utilisée pour un appel peut être déterminée à partir des ressources d'accès aléatoire utilisées.

Pour chaque requête d'accès aléatoire effectuée, le module 37 détermine les coordonnées (i_{RACH}, n_{RACH}) du couple de ressources (SC₍i_{RACH)} ; Pₛ(_{nRACH})) utilisé. Il transmet ces coordonnées au module 33, qui peut alors lui transmettre en retour un ou plusieurs identifiants de classes d'accès. Il détermine alors si au moins une des classes d'accès ainsi identifiée doit faire l'objet d'une restriction.

L'invention permet ainsi par exemple d'inhiber la restriction des appels d'urgence. L'indicateur associé à la classe d'accès réservée aux appels d'urgence peut en effet être positionné par configuration pour indiquer que cette classe particulière ne doit pas faire l'objet d'une restriction. Lors d'un appel d'urgence, la classe d'accès d'urgence sera utilisée et la classe ASC(θ) sera sélectionnée par l'UE. L'accès aléatoire correspondant ne pourra être effectué qu'en utilisant les ressources du sous-ensemble θ de couples {(sc(i) ; Pₛ(n)) / i_{min,θ} ≤ i ≤i_{max,θ} et n_{min,θ} ≤ n ≤ n_{max,θ}}. Le dispositif selon l'invention interceptera la requête d'accès aléatoire effectuée, et sera capable de reconnaître l'utilisation du sous-ensemble θ de couples de ressources, et par conséquent la sélection de la classe ASC(θ) et l'utilisation de la classe d'accès des appels d'urgence. Une simple consultation de la table de configuration précitée conduira à l'inhibition de la restriction de l'appel d'urgence.

Selon l'invention, la perturbation de l'acquittement de la requête d'accès aléatoire permet d'empêcher toute communication entre un UE et son réseau d'accès. La perturbation proprement dite est effectuée selon des techniques connues en soi. Elle peut par exemple consister en l'émission d'un signal empêchant la réception par l'UE de l'acquittement envoyé par le réseau d'accès, ou bien en l'émission par le dispositif de restriction d'un acquittement négatif.

Dans un mode préféré de réalisation de l'invention, le dispositif comprend un module 38 de commande d'émission de signaux large bande destinés à perturber l'acquittement AICH de la requête d'accès aléatoire. Ce module 38 reçoit du module 33 les informations relatives à l'émission sur un sous-canal AICH, et en particulier les informations de synchronisation des sous-canaux AICH sur le canal P-CPICH. La détermination de l'instant de début d'émission du signal de perturbation se fait sous contrôle du module 37, qui transmet au module 38 l'indice i_{RACH} du sous-canal d'accès aléatoire utilisé sc(i_{RACH}). L'émission du signal de perturbation est déclenchée sur le début de la tranche temporelle correspondante du sous-canal AICH d'indice i_{RACH}, et est au moins prolongée sur la durée prévue d'un indicateur d'acquittement Al de 4096 chips. Elle est effectuée par le module émetteur 39 sur l'antenne 40.

Il est en outre possible de tenir compte du temps de transmission des signaux entre un UE et un node-B. Il peut en effet être avantageux de se prémunir contre la situation où l'UE dont on souhaite restreindre les communications se trouve plus près de son node-B de supervision que du dispositif de restriction, et d'éviter que l'UE ne reçoive le signal d'acquittement de sa requête d'accès aléatoire avant le signal de perturbation. Pour cela, on estime le temps de propagation maximal entre un UE et sa station de base dans les cellules dont la couverture comprend une partie commune avec la zone de couverture du dispositif de restriction. La durée d'émission du signal de perturbation est alors augmentée d'une quantité T_{flight_time} sensiblement supérieure au double de ce temps de propagation maximal. L'émission du signal de perturbation anticipe alors celle du signal à perturber d'une durée sensiblement égale à la moitié de T_{flight_time}.

En milieu urbain, les cellules des systèmes radio-cellulaires ont généralement un diamètre d'environ 500 mètres, ce qui correspond à 6,4 temps chip dans le système UMTS FDD. Anticiper l'émission du signal de perturbation de 10 chips par rapport à l'instant de début d'émission de l'indicateur d'acquittement et la prolonger d'autant par rapport à l'instant de fin d'émission de cet indicateur permet d'éviter les inconvénients engendrés par les différences de temps de propagation entre l'UE et sa station de base, et l'UE et le dispositif de restriction.

Dans un autre mode de réalisation de l'invention, la perturbation consiste en l'émission par le dispositif de restrictione d'un acquittement négatif de la requête interceptée. Comme on l'a vu précédemment, cet acquittement négatif consiste dans le système UMTS en une signature inversée par rapport à la signature de préambule RACH. Dans ce cas de figure, le module 38 conserve dans des tables les informations nécessaires à la constitution de cet acquittement négatif qu'il reçoit du module 33 : signatures autorisées, tranches temporelles d'accès autorisées, code d'entrelacement, informations de synchronisation sur le canal P-CPICH. Sur réception des paramètres relatifs à un accès aléatoire intercepté transmis par le module 37, le module 38 commande l'émission par le module émetteur 39 d'un acquittement négatif sur la tranche d'accès du canal AICH correspondant au sous canal PRACH utilisé pour la requête d'accès aléatoire.

## Revendications

1. Procédé pour restreindre l'usage d'un terminal radio (4) apte à communiquer avec un réseau de radiocommunication (1, 5, 6), le réseau (1, 5, 6) étant agencé pour transmettre un signal d'acquittement en réponse à une requête d'accès au réseau reçue du terminal (4), le procédé comprenant les étapes suivantes :
- intercepter une requête d'accès au réseau émise par le terminal (4) ;
- évaluer, à partir de paramètres relatifs à la requête d'accès interceptée, un critère de restriction sélective ;
- lorsque le critère de restriction sélective est rempli, émettre un signal radio de perturbation du signal d'acquittement,
**caractérisé en ce que** le signal radio de perturbation du signal d'acquittement est un signal radio produisant une interférence avec ledit signal d'acquittement, et **en ce qu'**on estime un instant de début de réception du signal d'acquittement par le terminal (4) et un instant de fin de réception dudit signal d'acquittement par le terminal (4), et l'émission du signal radio de brouillage anticipe l'instant estimé de début de réception du signal d'acquittement par le terminal (4), et se prolonge au-delà de l'instant estimé de fin de réception dudit signal d'acquittement par le terminal (4).

2. Procédé selon la revendication 1, dans lequel l'évaluation du critère de restriction sélective comporte la détermination d'un type de communication dont l'établissement est requis par le terminal (4) à partir des paramètres relatifs à la requête d'accès interceptée.

3. Procédé selon la revendication 1 ou 2, dans lequel les paramètres relatifs à la requête d'accès comprennent des paramètres relatifs à des ressources utilisées pour requérir l'accès.

4. Procédé selon la revendication 3, dans lequel le réseau (1, 5, 6) a des ressources d'accès organisées selon un multiplex temporel de tranches d'accès, et dans lequel lesdits paramètres relatifs aux ressources utilisées pour requérir l'accès comprennent un indice de tranche temporelle au sein dudit multiplex.

5. Procédé selon la revendication 3 ou 4, dans lequel les paramètres relatifs aux ressources utilisées pour requérir l'accès comprennent un code d'accès.

6. Dispositif de restriction de l'usage d'un terminal radio (4) apte à communiquer avec un réseau de radiocommunication (1, 5, 6), le réseau (1, 5, 6) étant agencé pour transmettre un signal d'acquittement en réponse à une requête d'accès au réseau reçue du terminal (4), le dispositif comprenant des moyens (34, 35, 36, 37) pour intercepter une requête d'accès au réseau émise par le terminal (4), des moyens (37) pour évaluer un critère de restriction sélective, à partir de paramètres relatifs à la requête d'accès interceptée, et des moyens (38, 39, 40) pour émettre, lorsque le critère de restriction sélective est rempli, un signal radio de perturbation du signal d'acquittement, **caractérisé en ce que** le signal radio de perturbation du signal d'acquittement est un signal radio produisant une interférence avec ledit signal d'acquittement, et en ce le dispositif comporte des moyens pour estimer un instant de début de réception du signal d'acquittement par le terminal (4) et un instant de fin de réception dudit signal d'acquittement par le terminal (4), et pour émettre le signal radio de brouillage de façon anticipée par rapport à l'instant estimé de début de réception du signal d'acquittement par le terminal (4), et le prolonger au-delà de l'instant estimé de fin de réception dudit signal d'acquittement par le terminal (4).

7. Dispositif selon la revendication 6 dans lequel les moyens pour évaluer un critère de restriction sélective comprennent des moyens (33, 37) pour déterminer un type de communication dont l'établissement est requis par le terminal (4) à partir des paramètres relatifs à la requête d'accès interceptée.

8. Dispositif selon la revendication 6 ou 7, dans lequel les paramètres relatifs à la requête d'accès comprennent des paramètres relatifs à des ressources utilisées pour requérir l'accès.

9. Dispositif selon l'une quelconque des revendications 6 à 8, comprenant en outre des moyens (30, 31, 33) pour recevoir des informations relatives à une procédure d'accès au réseau diffusées par le réseau (1, 5, 6), coopérant avec lesdits moyens d'interception et d'évaluation.

## Claims

1. A method for restricting the use of a radio terminal (4) capable of communicating with a radio communication network (1, 5, 6), the network (1, 5, 6) being operative to transmit an acknowledgment signal in response to a network access request received from the terminal (4), which method comprises the following steps:
- intercepting a network access request issued by the terminal (4) ;
- evaluating, based on parameters relating to the intercepted access request, a selective restriction criterion;
- when the selective restriction criterion is fulfilled, emitting a radio signal to jam the acknowledgment signal, **characterized in that** the radio signal to jam the acknowledgment signal is a radio signal that produces interference with said acknowledgment signal, and **in that** a time when the receipt of the acknowledgment signal by the terminal (4) will start and a time when the receipt of the acknowledgment signal by the terminal (4) will end are estimated, and the jamming radio signal is emitted prior to the estimated time when the receipt of the acknowledgment signal by the terminal (4) will start, and continues past the estimated time when the receipt of the acknowledgment signal by the terminal (4) will end.

2. A method according to claim 1, wherein the evaluation of the selective restriction criterion comprises the determining of a type of communication that the terminal (4) is requesting to establish, based on parameters relating to the intercepted access request.

3. A method according to claim 1 or 2, wherein the parameters relating to the access request comprise parameters relating to resources used to request access.

4. A method according to claim 3, wherein the network (1, 5, 6) has access resources organized into an access timeslot multiplex, and wherein said parameters relating to resources used to request access comprise a timeslot index within said multiplex.

5. A method according to claim 3 or 4, wherein the parameters relating to resources used to request access comprise an access code.

6. A device restricting the use of a radio terminal (4) capable of communicating with a radio communication network (1, 5, 6), the network (1, 5, 6) being operative to transmit an acknowledgment signal in response to a network access request received from the terminal (4), the device comprising means (34, 35, 36, 37) for intercepting a network access request emitted by the terminal (4), means (37) for evaluating a selective restriction criterion, based on parameters relating to the intercepted access request, and means (38, 39, 40) for emitting, whenever the selective restriction criterion is fulfilled, a radio signal to jam the acknowledgment signal, **characterized in that** the radio signal to jam the acknowledgment signal is a radio signal producing interference with said acknowledgment signal, and **in that** the device comprises means for estimating a time when the receipt of the acknowledgment signal by the terminal (4) will start and a time when the receipt of the acknowledgment signal by the terminal (4) will end, and to emit the jamming radio signal prior to the estimated time when the receipt of the acknowledgment signal by the terminal (4) will start, and to continue it past the estimated time when the receipt of the acknowledgment signal by the terminal (4) will end.

7. A device according to claim 6 wherein the means for evaluating a selective restriction criterion comprise means (33, 37) for determining a type of communication that the terminal (4) is requesting to establish, based on parameters relating to the intercepted access request.

8. A device according to claim 6 or 7, wherein the parameters relating to the access request comprise parameters relating to resources used to request access.

9. A device according to any of the claims 6 to 8, further comprising means (30, 31, 33) for receiving information distributed by the network (1, 5, 6) relating to a network access procedure, cooperating with said means of interception and evaluation.

## Patentansprüche

1. Verfahren zur Einschränkung der Benutzung eines für die Kommunikation mit einem Funkkommunikationsnetzwerk (1, 5, 6) geeigneten Funkendgeräts (4), wobei das Netzwerk (1, 5, 6) für die Übertragung eines Quittierungssignals in Reaktion auf eine von dem Endgerät (4) empfangene Zugangsanforderung ausgelegt ist, wobei das Verfahren die folgenden Schritte umfasst:
- Abfangen einer von dem Endgerät (4) ausgegebenen Netzzugangsanforderung (4);
- Bewerten, ausgehend von Parametern in Bezug auf die abgefangene Zugangsanforderung, eines Kriteriums für die selektive Einschränkung;
- wenn das Kriterium für die selektive Einschränkung erfüllt ist, Ausgeben eines Funksignals zur Störung des Quittierungssignals,
**dadurch gekennzeichnet, dass** das Funksignal zur Störung des Quittierungssignals ein Funksignal ist, welches eine Interferenz mit dem besagten Quittierungssignal erzeugt, und dass man einen Zeitpunkt für den Beginn des Empfangs des Quittierungssignals am Endgerät (4) und einen Zeitpunkt für das Ende des Empfangs des besagten Quittierungssignal am Endgerät (4) abschätzt, und dass die Ausgabe des Funkstörsignals dem geschätzten Zeitpunkt für den Beginn des Empfangs des Quittierungssignals am Endgerät vorausgeht (4) und sich über den geschätzten Zeitpunkt des Endes des Empfangs des besagten Quittierungssignals am Endgerät (4) hinaus verlängert.

2. Verfahren nach Anspruch 1, wobei das Bewerten des Kriteriums für die selektive Einschränkung das Bestimmen des Typs der Kommunikation, deren Herstellung von dem Endgerät (4) angefordert wird, ausgehend von den Parametern in Bezug auf die abgefangene Zugangsanforderung umfasst.

3. Verfahren nach Anspruch 1 oder 2, wobei die Parameter in Bezug auf die Zugangsanforderung Parameter in Bezug auf die für die Anforderung des Zugangs benutzten Ressourcen umfassen.

4. Verfahren nach Anspruch 3, wobei das Netzwerk (1, 5, 6) über Ressourcen verfügt, die gemäß einem Zeitmultiplexverfahren von Zugangszeitschlitzen organisiert sind, und wobei die besagten Parameter in Bezug auf die für die Anforderung des Zugangs benutzten Ressourcen einen Index für die Zeitschlitze innerhalb des besagten Multiplexverfahren umfassen.

5. Verfahren nach Anspruch 3 oder 4, wobei die Parameter in Bezug auf die für die Anforderung des Zugangs benutzten Ressourcen einen Zugangscode umfassen.

6. Vorrichtung zur Einschränkung der Benutzung eines für die Kommunikation mit einem Funkkommunikationsnetzwerk (1, 5, 6) geeigneten Funkendgeräts (4), wobei das Netzwerk (1, 5, 6) für die Übertragung eines Quittierungssignals in Reaktion auf eine von dem Endgerät (4) empfangene Zugangsanforderung ausgelegt ist, wobei die Vorrichtung Mittel (34, 35, 36, 37) zum Abfangen einer von dem Endgerät (4) ausgegebenen Netzzugangsanforderung (4), Mittel (37) zum Bewerten, ausgehend von Parametern in Bezug auf die abgefangene Zugangsanforderung, eines Kriteriums für die selektive Einschränkung, und Mittel (38, 39, 40) zum Ausgeben, wenn das Kriterium für die selektive Einschränkung erfüllt ist, eines Funksignals zur Störung des Quittierungssignals umfasst, **dadurch gekennzeichnet, dass** das Funksignal zur Störung des Quittierungssignals ein Funksignal ist, welches eine Interferenz mit dem besagten Quittierungssignal erzeugt, und dass die Vorrichtung Mittel umfasst, um einen Zeitpunkt für den Beginn des Empfangs des Quittierungssignals am Endgerät (4) und einen Zeitpunkt für das Ende des Empfangs des besagten Quittierungssignal am Endgerät (4) abzuschätzen, und um das Funkstörsignal vor dem geschätzten Zeitpunkt für den Beginn des Empfangs des Quittierungssignals am Endgerät (4) auszugeben und es über den geschätzten Zeitpunkt des Endes des Empfangs des besagten Quittierungssignals am Endgerät (4) hinaus zu verlängern.

7. Vorrichtung nach Anspruch 6, wobei die Mittel zum Bewerten eines Kriteriums für die selektive Einschränkung Mittel (33, 37) zum Bestimmen des Typs der Kommunikation, deren Herstellung von dem Endgerät (4) angefordert wird, ausgehend von den Parametern in Bezug auf die abgefangene Zugangsanforderung umfassen.

8. Vorrichtung nach Anspruch 6 oder 7, wobei die Parameter in Bezug auf die Zugangsanforderung Parameter in Bezug auf die für die Anforderung des Zugangs benutzten Ressourcen umfassen.

9. Vorrichtung nach einem beliebigen der Ansprüche 6 bis 8, weiterhin umfassend Mittel (30, 31, 33) zum Empfangen von Informationen in Bezug auf ein Netzzugangsverfahren, die von dem Netzwerk (1, 5, 6), welches mit den besagten Mitteln zum Abfangen und zum Bewerten zusammenwirkt, ausgesendet werden.
